# EUROPÄISCHE PATENTANMELDUNG

(11) **EP 0 855 337 A2**
(43) Veröffentlichungstag der Anmeldung: **29.07.1998**
(21) Anmeldenummer: 98101328.7
(22) Anmeldetag: 27.01.1998
(51) Int. Cl.: B62M 25/04, B62K 23/04

(54) **Schaltmittel für Fahrradschaltung**

(30) Priorität: 28.01.1997 DE 29701387 U; 04.02.1997 DE 29701894 U
(71) Anmelder: Westenberger, Andreas, 31170 Tournefeuille (FR)
(72) Erfinder: Westenberger, Andreas, 31170 Tournefeuille (FR)
(74) Vertreter: Richter, Werdermann & Gerbaulet

(57) **Zusammenfassung**

Ein Schaltmittel (100), das einfach zu bedienen und extreme bzw. unerwünschte Schaltkombination nicht zuläßt, für eine Fahrradkettenschaltung mit wenigstens einer Schalteinrichtung, insbesondere einem Umwerfer, für wenigstens eine Kettenritzel- bzw. Kettenradanordnungen, wobei jeder Umwerfer über ein Zugmittel(10) betätigbar ist, ist in der Weise ausgebildet, daß wenigstens eines der Zugmittel (10) schaltmittelseitig jeweils mit einem Kulissenstein (12) verbunden ist, welcher jeweils in Bewegungsrichtung der Zugmittel (10) in einem stationären Teil (14) des Schaltmittels (100) in einem Lager (18) beweglich geführt und mit einem Nocken (20) versehen ist, welcher jeweils in eine Nockenkurve (22) in einem beweglichen Teil (16) des Schaltmittels (100) greift, wobei sich durch Bewegen des beweglichen Teils (16) des Schaltmittels (100) die Kulissensteine (12) vorbestimmt entlang ihres Lagers (18) im stationären Teil (14) des Schaltmittels (100) bewegen und vorbestimmte Stellungen der Umwerfer einstellen.

## Beschreibung

Die Erfindung betrifft ein Schaltmittel für eine Fahrradschaltung mit wenigstens einer Schalteinrichtung, insbesondere mit wenigstens einer Schalteinrichtung, für wenigstens eine Kettenritzel- bzw. Kettenradanordnungen, wobei jede Schalteinrichtung über ein Zugglied betätigbar ist.

Die Fahrradindustrie liefert in zunehmendem Maße Fahrradschaltsysteme mit immer größerer Anzahl von Kettenrädern bzw. Kettenritzeln pro Achse, um den Übersetzungsbereich zu vergrößern bzw. die Übersetzungsabstände zueinander zu verringern. Durchaus üblich sind heute 7 bis 9 Kettenritzel am Hinterrad und 2 bis 3 Kettenräder an der Tretkurbel. Dabei betragen die Zahnunterschiede hinten bis zu 17 und mehr Zähne und vorne 20 Zähne. Die Umwerferbedienungen für die Kettenwerfer vorn und hinten sind getrennte Einheiten und arbeiten entsprechend nach wie vor unabhängig.

Derartige Systeme bieten zwar viele Vorteile, bringen aber mit zunehmender Zahl an Kettenritzel und Kettenrädern und mit entsprechend zunehmender Baubreite der Kettenradpakete und ihrer Spreizung der Zähnezahl auch Probleme mit sich. Der Ursprung dieser Probleme liegt in den extremen der möglichen Kettenrad-Kettenritzel-Kombinationen. D.h., wenn das äußere, kleinste Kettenritzel mit dem inneren, kleinsten Kettenrad oder genau umgekehrt durch die Kette verbunden sind, muß der Kettenlängenausgleich extrem groß sein und die Kette einen sehr großen Verzerrungswinkel ertragen. Schließlich führt die hohe Zahl an Kettenritzeln und Kettenrädern dazu, daß zwei oder mehrfach vorhandene Übersetzungsmöglichkeiten entstehen, die zwar durch geschicktes und konzentriertes Schalten vermieden werden können, was aber in der Praxis nicht jedermann einfach umsetzen kann, da insbesondere viel Übung und Training bei der Bedienung der Gangschaltung erforderlich ist. Dies resultiert im wesentlichen auch aus der unabhängigen Bedienung der Umwerfer von vorderem Kettenrad und hinterem Kettenritzel.

Es ist Aufgabe der vorliegenden Erfindung, ein verbessertes Schaltmittel der obengenannten Art zur Verfügung zu stellen, welche die obengenannten Nachteile beseitigt und die Bedienung insbesondere von Vielgangschaltungen vereinfacht.

Diese Aufgabe wird durch ein Schaltmittel der o.g. Art mit den in Anspruch 1 gekennzeichneten Merkmalen gelöst.

Dazu ist es erfindungsgemäß vorgesehen, daß wenigstens eines der Zugmittel schaltmittelseitig jeweils mit einem Kulissenstein verbunden ist, welcher jeweils in Bewegungsrichtung der Zugmittel in einem stationären Teil des Schaltmittels in einem Lager beweglich geführt und mit einem Nocken versehen ist, welcher jeweils in eine Nockenkurve in einem beweglichen Teil des Schaltmittels greift, wobei sich durch Bewegen des beweglichen Teils des Schaltmittels die Kulissensteine vorbestimmt entlang ihres Lagers im stationären Teil des Schaltmittels bewegen und vorbestimmte Stellungen der Umwerfer einstellen.

Dies hat den Vorteil, daß ein einziges, einfach zu bedienendes Schaltmittel geschaffen wird, welches extreme bzw. unerwünschte Schaltkombinationen nicht zuläßt. Durch entsprechende Auswahl der Kettenritzel und Kettenräder lassen sich so mehrfach vorhandene und schaltbare Übersetzungen leicht vermeiden.

Vorzugsweise Weitergestaltungen der Vorrichtung sind in den Ansprüchen 2 bis 21 beschrieben.

So ergibt sich eine besonders einfache und wirkungsvolle Anordnung, welche Schaltsteuerungen für zwei oder mehr Zugmittel mechanisch mischt, wenn zwei oder mehr Umwerfer mit zwei oder mehr Zugmitteln mit zwei oder mehr Kulissensteinen vorgesehen sind und am beweglichen Teil des Schaltmittels zwei oder mehr Nockenkurven angeordnet sind.

In vorteilhafter Weise sind die Umwerfer derart federbelastet, daß an den Zugmitteln schaltmittelseitig eine Kraft vom Schaltmittel weg in Richtung des Zugmittelverlaufes wirkt.

Eine einfache und wirkungsvolle Führung der Kulissensteine ergibt sich dadurch, daß im beweglichen Teil des Schaltmittels für jeden Kulissenstein eine eigene Nockenkurve vorgesehen ist.

Eine einfache und intuitiv ausführbare Bedienung ergibt sich dadurch, daß die Nockenkurve bzw. die Nockenkurven derart ausgebildet sind, daß der Kulissenstein bzw. die Kulissensteine automatisch bei fortlaufender Betätigung des beweglichen Teils des Schaltmittels nacheinander aufsteigend oder absteigend Gänge der Fahrradgangschaltung schalten.

In vorteilhafter Weise ist das Zugglied ein Bowdenzug, ein Zugseil oder ein Gestänge.

Eine einfache und kostengünstige herstellbare Konstruktion des erfindungsgemäßen Schaltmittels ergibt sich dadurch, daß das stationäre Teil und das bewegliche Teil des Schaltmittels jeweils rohrförmige Zylinder sind, welche ineinandergreifen. Hierbei greift in vorteilhafter Weise das bewegliche Teil über das stationäre Teil und die Lager sind vorzugsweise Ausnehmungen in einer Rohrwandung des stationären Teiles.

Für eine einfache Montage des Schaltmittels selbst und an einem Fahrradlenker ist das stationäre Teil aus zwei Rohrzylinderhälften zusammengesetzt, die miteinander verschraubbar sind. Dabei sind die Lager bevorzugt an wenigstens einer Rohrzylinderhälfte als axial verlaufende Ausnehmungen ausgebildet.

Für eine einfache Ankopplung an Zugmittel weist das stationäre Teil an einem der Zugmittel zugewandten Ende axial mit den Lagern fluchtende Bohrungen zum Durchführen der Zugmittel auf.

Für einen stabilen und funktionssicheren Aufbau ist an einem von den Zugmitteln abgewandten Ende des stationären Teiles ein Haltering befestigbar, welcher das bewegliche Teil auf dem stationären Teil vor einem Herunterziehen gesichert drehbar hält.

In vorteilhafter Weise ist auf das bewegliche Teil ein Griff mit Außenwandprofilierung aufschiebbar. Dies erleichtert zusätzlich die Bedienung des Schaltmittels und schütz die inneren Teile des Bedienungsmittels vor Verschmutzung und Umwelteinflüssen.

Für eine sichere Funktion bei der Betätigung des Schaltmittels über den Griff sind am beweglichen Teil Fixierungsmittel vorgesehen, welche das bewegliche Teil mit dem Griff drehfest verbinden.

In vorteilhafter Weise sind die Kulissensteine in ihrem jeweiligen Lager an wenigstens einer Führungsschiene, welche mit dem stationären Teil verbunden ist, geführt.

In besonders vorteilhafter Weise ist das bewegliche Teil des Betätigungsmittels ein Drehgriff und die Umwerfer sind bevorzugt Kettenwerfer.

Eine besonders praktische Anordnung für ein Schaltmittel, welches vielseitig einsetzbar ist, wird dadurch erzielt, daß ein Kulissenstein das Zugmittel für den Umwerfer der Kettenradanordnung an der Tretkurbel und ein Kulissenstein das Zugmittel für den Umwerfer der Kettenritzelanordnung am Hinterrad betätigt.

Zum sicheren Schalten von einzelnen Gängen weist die Nockenkurve für verschiedene Gänge jeweils Einrastmittel auf. Diese sind bevorzugt Ausnehmungen oder Erhöhungen oder Vertiefungen in der Nockenkurve.

Nachstehend wird die Erfindung anhand der beigefügten Zeichnungen näher erläutert. Diese zeigen in
- Fig. 1: eine perspektivische, teils explosionsartige Darstellung eines Schaltmittels,
- Fig. 2: eine perspektivische, teils explosionsartige Darstellung des Schaltmittels von Figur 1, wobei dieses teilweise vormontiert ist,
- Fig. 3: eine weitere perspektivische, teils explosionsartige Darstellung des Schaltmittels von Figur 1, wobei dieses gegenüber Figur 2 noch weiter vormontiert ist,
- Fig. 4: eine perspektivische Vorderansicht des Schaltmittels, und
- Fig. 5: ein Montagebeispiel des Schaltmittels an einem Fahrradlenker.

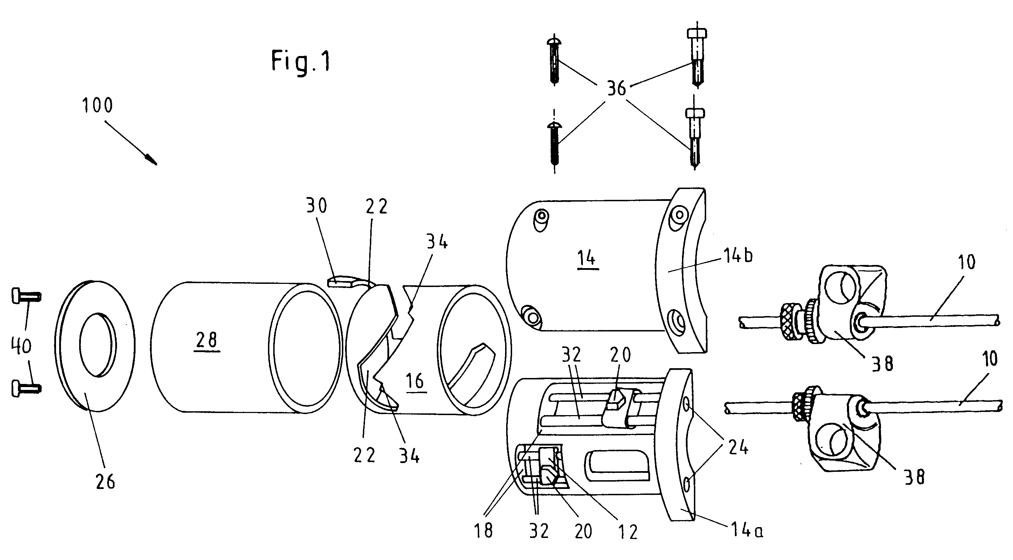

Wie in Figur 1 dargestellt, umfaßt ein erfindungsgemäßes Schaltmittel 100 ein stationäres Teil 14, ein bewegliches Teil 16 mit Nockenkurven 22, ein Griffteil 28 und einen Haltering 26. Das stationäre Teil 14 ist aus zwei Rohrzylinderhälften 14a und 14b zusammengesetzt, welche in der Figur 1 in auseinandergebautem Zustand dargestellt sind. Die Hälften 14a und 14b sind mittels Schrauben 38 miteinander verbindbar.

Die Zylinderhälfte 14a weist Lager 18 auf, in denen Kulissensteine 12 an Führungsschienen 32 entlang beweglich gelagert sind. Jeder Kulissenstein 12 hat ferner einen Nocken 20, dessen Funktion nachfolgend näher erläutert wird. In der Hälfte 14a sind ferner fluchtend mit den Lagern 18 Bohrungen 24 vorgesehen. Diese dienen zum Durchführen von Zugmitteln 10, welche nicht dargestellte Umwerfer betätigen. Vor dem Eintritt der Zugmittel 10 in die Bohrungen 24 sind die Zugmittel 10 in Lagermitteln 38 geführt. Nach der Endmontage verlaufen die Zugmittel 10 durch die Bohrungen 24 und sind an den Kulissensteinen 12 befestigt.

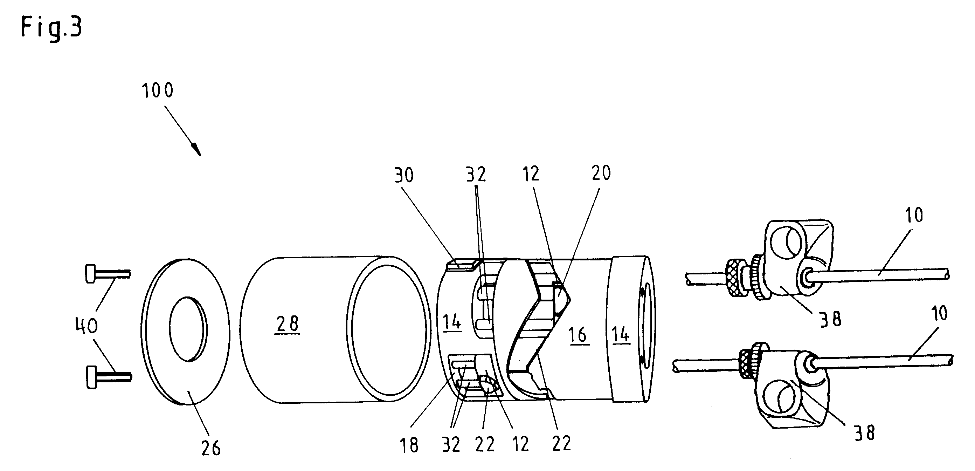

Das bewegliche Teil 16 ist in der dargestellten bevorzugten Ausführungsform ebenfalls rohrzylinderformig derart ausgebildet, daß es über den zusammengebauten stationären Teil 14 greift. Dies ist nachfolgend unter Bezugnahme auf Fig. 3 näher erläutert. Das bewegliche Teil weist Nockenkurven 22 auf, in die die Nocken 20 der Kulissensteine 12 greifen.

Weiterhin ebenfalls rohrzylinderförmig ausgebildet ist ein Griff 28, so daß dieser paßgenau über des bewegliche Teil 16 und das stationäre Teil 14 aufgeschoben werden kann. Ein Fixierungsmittel 30 greift dabei in nicht dargestellte Ausnehmungen an einer Innenseite des Griffes 28 und verbindet den Griff 28 drehfest mit dem beweglichen Teil 16, so daß das bewegliche Teil 16 manuell über den Griff 28 betätigbar ist. Diese Betätigung ist in der vorliegenden vorteilhaften Ausführungsform eine Drehbewegung um die Längsachse der rohrzylinderförmigen Teile 14, 16 und 28. Es ist aber beispielsweise auch eine Hubbewegung möglich. Die jeweiligen Längsmittelachsen der Teile 14, 16 und 18 fluchten nach der Endmontage miteinander.

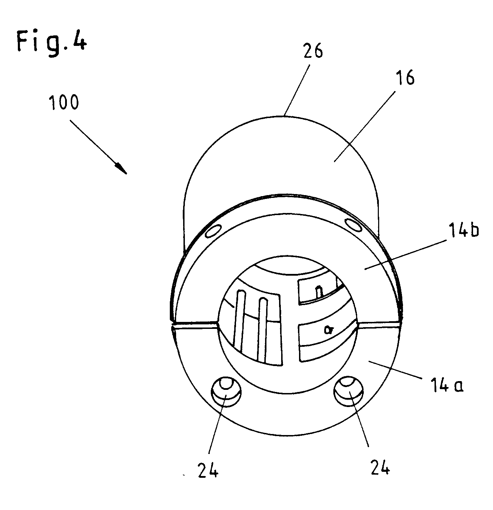

Rückseitig ist auf das stationäre Teil 14 ein Haltering 26 mit Schrauben 40 aufschraubbar. Dieser Haltering 26 hält den Griff 28 in seiner aufgeschobenen Position (Fig. 4) und fixiert die in das stationäre Teil 14a eingeschobenen Führungsschienen 32 in entsprechenden nicht dargestellten Bohrungen.

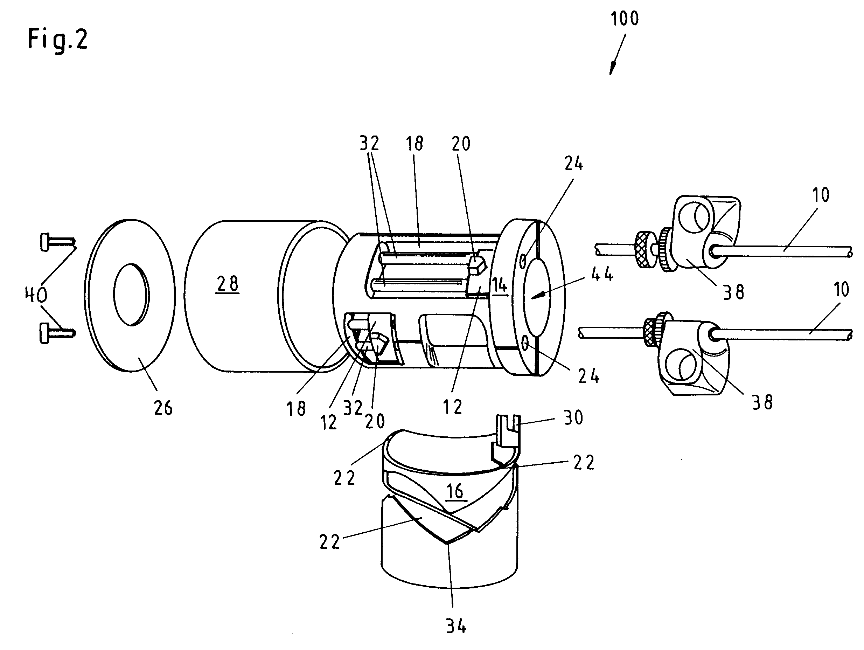

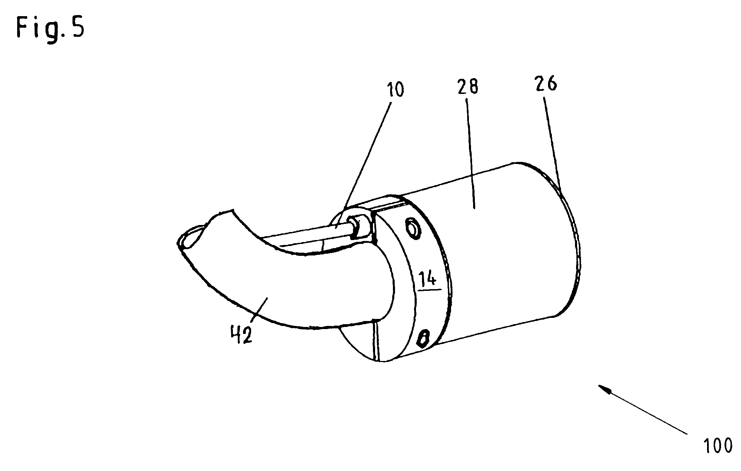

Fig. 2 zeigt das Schaltmittel 100 analog zur Fig. 1, wobei das stationäre Teil 14 bzw. die Hälften 14a und 14b das stationären Teiles 14 zusammengebaut sind. Die in dem stationären Teil so entstehende Ausnehmung 44 dient zum Aufschieben auf und befestigen an einem Fahrradlenker (Fig. 5).

Fig. 3 zeigt das Schaltmittel 100 in einem weiter fortgeschrittenen Montagestadium. Hierbei ist des bewegliche Teil 16 auf das stationäre Teil 14 aufgeschoben und drehbar gegenüber letzterem beweglich. Die Nocken 20 der Kulissensteine 12 greifen nun jeweils in eine Nockenkurve 22. Wie aus Fig. 3 ersichtlich, führt eine Drehbewegung des beweglichen Teils 16 dazu, daß die Kulissensteine 12 durch eine Führung der Nocken 20 entlang der Nockenkurven 22 entlang der Schienen 32 hin- und herbewegt werden. Diese Bewegung erfolgt in Richtung der Bewegungsrichtung der Zugmittel 10, so daß die an den Kulissensteinen 12 befestigten Zugmittel 10 entsprechend angezogen oder nachgelassen werden. Im Ergebnis werden die von den Zugmitteln betätigten Umwerfer entsprechend der Bewegung der Kulissensteine 12 betätigt.

Durch die beiden unterschiedlichen Nockenkurven 22 am beweglichen Teil 16 jeweils für die beiden Kulissensteine 12 ergibt sich somit eine mechanische Mischung der Betätigung zweier Umwerfer über die beiden dargestellten Kulissensteine 12. Beim Drehen des beweglichen Teiles 16 fährt der in der Fig. 3 rechte Kulissenstein 12 eine schräge Führung der in der Fig. 3 rechten Nockenkurve 22 ab, während der in der Fig. 3 linke Kulissenstein 12 durch die im wesentlichen ebene Führung der in der Figur 3 linken Nockenkurve 22 in einer konstanten Position verbleibt. Der linke Kulissenstein 12 betätigt beispielsweise den Umwerfer an einem Kettenrad an einer Tretkurbel, während der rechte Kulissenstein 12 den Umwerfer an einer Kettenritzelanordnung an einem Hinterrad betätigt. Das bedeutet im Ergebnis, daß bei sukzessiver Drehung des beweglichen Teils 16 der Umwerfer am Kettenrad an der Tretkurbel entsprechend der konstanten Position des linken Kulissenstein 12 in seiner Position verharrt, während der Umwerfer an der Kettenritzelanordnung am Hinterrad sukzessive die Gänge durchschaltet, bis die Nocke 20 des rechten Kulissensteines 12 an einem Tiefpunkt in der rechten Nockenkurve 22 ankommt. Auf diese Weise werden beispielsweise die ersten sechs Gänge einer Gangschaltung durchgefahren.

Bei der Darstellung in Fig. 3 ist gerade dieser Zustand dargestellt. An diesem Punkt werden beide Nocken 20 und entsprechend beide Kulissensteine 12 durch die Nockenkurven 22 in der Figur nach links verschoben, d.h. der Umwerfer am Kettenrad (linker Kulissenstein 12) wird in die nächst höhere Gangstufe verschoben und der Umwerfer am Kettenritzel (rechter Kulissenstein 12) kehrt zurück in die Ausgangsposition kleiner Gänge. Nun durchläuft der rechte Kulissenstein 12 abermals eine äquivalente schräge Nockenkurve wie zuvor, während der linke Kulissenstein 12 wieder in seiner Position verharrt. Auf diese Weise werden nun beispielsweise die Gänge 7 bis 12 einer Gangschaltung durchgeschaltet. Dies alles geschieht, wie leicht ersichtlich, nicht durch die kompliziert abzustimmende Bewegung zweier Betätigungshebel, sondern durch eine einfache Drehung alleine des Griffes 28 an dem Schaltmittel 100.

In Fig. 4 sind in einer Vorderansicht des vollständig montierten Betätigungsmittels 100 die Bohrungen 24 für die Durchführung der Zugmittel zu den Kulissensteinen noch einmal deutlich dargestellt. In Fig. 5 ist ein Montagebeispiel für das Schaltmittel 100 an einem Fahrradlenker 42 dargestellt. Hierbei ist der Griff 28 mit einer profilierten Oberfläche für eine einfachere Bedienbarkeit versehen. Ein Haltering 26 fixiert die aufgesteckten Teile, nämlich das bewegliche Teile 16 und den Griff 28, wobei beide bezüglich dem stationären Teil 14 drehbar bleiben.

Es handelt sich also vorliegend bei der bevorzugten Ausführungsform um eine Bedienungseinrichtung für Fahrradgangschaltungen, bei der durch einen Drehgriffmechanismus über ein Zugglied bzw. über Zugglieder (Bowdenzug, Zugseil, Gestänge usw.) eine federbelastete Schalteinrichtung betätigt wird. Der Drehgriffmechanismus ist dabei insbesondere dadurch gekennzeichnet, daß das (die) Zugglied(er) von einem in einer Kulisse oder einer ähnlichen linearen Führung (z.B. Säulenführung oder Nockenkurve) geführten Kulissenstein bestätigt wird (werden). Die Betätigung der Kulissensteine 12 erfolgt dabei über eine im Drehgriff 28 bzw. 16 eingearbeitete Steuerkurve mit einer Drehbewegung in eine jeweilige Schaltposition. Der Bedienmechanismus 100 verfügt vorzugsweise über eine Rastereinrichtung 34, die die Drehbewegung bei jedem Gang einrasten läßt. Über zwei Übertragungselemente 12, 10, 22 (Kulisse, Kulissenstein, Steuerkurve) sind über den gemeinsamen Drehgriff 28, 16 zwei getrennte Schalteinrichtungen, wie beispielsweise Umwerfer, betätigbar.

Die Rasterung kann dabei bereits in der Steuerkurve 22 eingearbeitet sein oder sich getrennt davon an einer anderen stelle des Bedienmechanismus 100 befinden. Das Bedienelement 100 betätigt dabei wenigstens einen, insbesondere zwei Umwerfer oder Nabenschaltungen. Diese Schaltbewegungen werden hierbei vorzugsweise mechanisch gemischt. Beispielsweise kann vorgesehen sein, daß bei einer Konfiguration von zwei Zahnkränzen vorne und acht Ritzeln hinten, im Falle das sich das äußere vordere Zahnrad im Einsatz befindet, nur die sechs äußersten Ritzel 1 bis 6 schaltbar sind. Bei einem weiteren Herunterschalten wird die Kette vorne durch entsprechende Betätigung des Umwerfers auf das innere Zahnrad gelegt und gleichzeitig, durch die Mischfunktion der Bedieneinrichtung 100, wie oben beschrieben, hinten auf das Ritzel 3 zurückgelegt. Befindet sich die Kette auf dem vorderen inneren Zahnrad, sind nur die inneren sechs Ritzel 3 bis 8 schaltbar.

Dies Bedieneinrichtung 100 bietet gegenüber üblichen Bedienelementen mehr Sicherheit während des Bedien- bzw. Schaltvorganges, weil die Bedienhand am Lenker 42 verbleibt und eine Sturzgefahr somit reduziert ist. Ferner sind auch die Gangschaltung und/oder Kette möglicherweise beschädigende Schaltvorgänge ausgeschlossen. Ferner gibt es keine Hebel, die Abbrechen könnten oder ein zusätzliches Verletzungsrisiko in sich bergen. Durch die Mischfunktion ergeben sich zusätzlich Vorteile bezüglich der Schaltsicherheit in den richtigen, gewünschten Gang und eine bedeutend bessere Ausnutzung der Schalteinrichtung.

Bei geschickter Auswahl der Kraftübertragungselemente - vordere Zahnkränze und hintere Kettenritzel - ergeben sich keine doppelten Übersetzungen und eine bessere Gangabstufung bei einer größeren Spreizung der Übersetzungsverhältnisse. Die daraus resultierende geringere Kettenlängenänderung, bei jeweils extremen Kombinationen von vorderem äußeren Kettenrad mit hinterem inneren Ritzel und umgekehrt, werden unterdrückt und ermöglichen die Verwendung gleicher kleinerer hinterer Umwerfer. Die geringere Verzerrung der Kette, die sich hierbei ergibt, bewirkt geringere Übertragungsverluste des Antriebs und erhöht ihre Lebensdauer. Die Benutzung weniger und kleinerer Teile am Antrieb bei gleicher Übersetzungsleistung und besserer Übertragungsleistung wirkt sich wiederum günstig im Gewicht des Fahrrades aus, welches möglichst gering sein soll.

### BEZUGSZEICHENLISTE

- 100: Schaltmittel
- 10: Zugglied
- 12: Kulissenstein
- 14: stationärer Teil
- 14a,14b: Rohrzylinderhälften des stationären Teils
- 16: beweglicher Teil
- 18: Lager
- 20: Nocken
- 22: Nockenkurve
- 24: Bohrungen
- 26: Haltering
- 28: Griff
- 30: Fixierungsmittel
- 32: Führungsschiene
- 34: Einrastmittel
- 36: Schrauben für stationäres Teil
- 38: Lagermittel
- 40: Schrauben für Haltering
- 42: Fahrradlenker
- 44: Ausnehmung

## Patentansprüche

1. Schaltmittel (100) für eine Fahrradschaltung mit wenigstens einer Schalteinrichtung, insbesondere mit wenigstens einer Schalteinrichtung, für wenigstens eine Kettenritzel- bzw. Kettenradanordnungen, wobei jede Schalteinrichtung über ein Zugmittel (10) betätigbar ist,
dadurch gekennzeichnet, daß
wenigstens eines der Zugmittel (10) schaltmittelseitig jeweils mit einem Kulissenstein (12) verbunden ist, welcher jeweils in Bewegungsrichtung der Zugmittel (10) in einem stationären Teil (14) des Schaltmittels (100) in einem Lager (18) beweglich geführt und mit einem Nocken (20) versehen ist, welcher jeweils in eine Nockenkurve (22) in einem beweglichen Teil (16) des Schaltmittels (100) greift, wobei sich durch Bewegen des beweglichen Teils (16) des Schaltmittels (100) die Kulissensteine (12) vorbestimmt entlang ihres Lagers (18) im stationären Teil (14) des Schaltmittels (100) bewegen und vorbestimmte Stellungen der Umwerfer einstellen.

2. Schaltmittel (100) nach Anspruch 1,
dadurch gekennzeichnet, daß
zwei oder mehr Umwerfer oder andere Schalteinrichtungen mit zwei oder mehr Zugmitteln (10) mit zwei oder mehr Kulissensteinen (12) vorgesehen sind und am beweglichen Teil (16) des Schaltmittels (100) entsprechend zwei oder mehr Nockenkurven (22) angeordnet sind.

3. Schaltmittel (100) nach einem der Ansprüche 1 oder 2,
dadurch gekennzeichnet, daß
die Umwerfer oder andere Schalteinrichtungen derart federbelastet sind, daß an den Zugmitteln (10) schaltmittelseitig eine Kraft vom Schaltmittel (100) weg in Richtung des Zugmittelverlaufes wirkt.

4. Schaltmittel (100) nach einem der Ansprüche 1 bis 3,
dadurch gekennzeichnet, daß
im beweglichen Teil (16) des Schaltmittels (100) für jeden Kulissenstein (12) eine eigene Nockenkurve (22) vorgesehen ist.

5. Schaltmittel nach einem der Ansprüche 1 bis 4,
dadurch gekennzeichnet, daß
die Nockenkurve (22) bzw. die Nockenkurven (22) derart ausgebildet sind, daß der Kulissenstein (12) bzw. die Kulissensteine (12) automatisch bei fortlaufender Betätigung des beweglichen Teils (16) des Schaltmittels (100) nacheinander aufsteigend oder absteigend Gänge der Fahrradgangschaltung schalten.

6. Schaltmittel (100) nach einem der Ansprüche 1 bis 5,
dadurch gekennzeichnet, daß
das Zugmittel (10) ein Bowdenzug, ein Zugseil oder ein Gestänge ist.

7. Schaltmittel (100) nach einem der Ansprüche 1 bis 6,
dadurch gekennzeichnet, daß
das stationäre Teil (14) und das bewegliche Teil (16) des Schaltmittels (100) jeweils rohrförmige Zylinder sind, welche ineinandergreifen.

8. Schaltmittel (100) nach Anspruch 7,
dadurch gekennzeichnet, daß
das bewegliche Teil (16) über das stationäre Teil (14) greift.

9. Schaltmittel (100) nach Anspruch 7 oder 8,
dadurch gekennzeichnet, daß
die Lager (18) Ausnehmungen in einer Rohrwandung des stationären Teiles (14) sind.

10. Schaltmittel (100) nach einem der Ansprüche 7 bis 9,
dadurch gekennzeichnet, daß
das stationäre Teil (14) aus zwei Rohrzylinderhälften (14a,14b) zusammengesetzt ist, die miteinander verbindbar oder verschraubbar sind.

11. Schaltmittel (100) nach Anspruch 10,
dadurch gekennzeichnet, daß
die Lager (18) an wenigstens einer Rohrzylinderhälfte (14a) als axial verlaufende Ausnehmungen ausgebildet sind.

12. Schaltmittel (100) nach einem der Ansprüche 1 bis 11,
dadurch gekennzeichnet, daß
das stationäre Teil (14) an einem der Zugmittel (10) zugewandten Ende axial mit den Lagern (18) fluchtende Bohrungen (24) zum Durchführen der Zugmittel (10) aufweist.

13. Schaltmittel (100) nach einem der Ansprüche 1 bis 12,
dadurch gekennzeichnet, daß
an einem von den Zugmitteln (10) abgewandten Ende des stationären Teiles (14) ein Haltering (26) befestigbar ist, welcher das bewegliche Teil (16) auf dem stationären Teil (14) vor dem Herunterziehen gesichert drehbar hält.

14. Schaltmittel (100) nach einem der Ansprüche 1 bis 13,
dadurch gekennzeichnet, daß
auf das bewegliche Teil (16) ein Griff (28) mit Außenwandprofilierung aufschiebbar ist.

15. Schaltmittel (100) nach Anspruch 14,
dadurch gekennzeichnet, daß
am beweglichen Teil (16) Fixierungsmittel (30) vorgesehen sind, welche das bewegliche Teil (16) mit dem Griff (28) drehfest verbinden.

16. Schaltmittel (100) nach einem der Ansprüche 1 bis 15,
dadurch gekennzeichnet, daß
die Kulissensteine (12) in ihrem jeweiligen Lager (18) an wenigstens einer Führungsschiene (32), welche mit dem stationären Teil (14) verbunden ist, geführt sind.

17. Schaltmittel (100) nach einem der Ansprüche 1 bis 16,
dadurch gekennzeichnet, daß
das bewegliche Teil (16) des Schaltmittels (100) ein Drehgriff ist.

18. Schaltmittel (100) nach einem der Ansprüche 1 bis 17,
dadurch gekennzeichnet, daß
die Umwerfer oder andere Schalteinrichtungen Kettenwerfer sind.

19. Schaltmittel (100) nach einem der Ansprüche 1 bis 18,
dadurch gekennzeichnet, daß
ein Kulissenstein (12) das Zugmittel (10) für den Umwerfer der Kettenradanordnung an der Tretkurbel und ein Kulissenstein (12) das Zugmittel (10) für den Umwerfer oder andere Schalteinrichtungen der Kettenritzelanordnung am Hinterrad betätigt.

20. Schaltmittel (100) nach einem der Ansprüche 1 bis 19,
dadurch gekennzeichnet, daß
die Nockenkurve (22) für verschiedene Gänge jeweils Einrastmittel (34) aufweist.

21. Schaltmittel (100) nach Anspruch 20,
dadurch gekennzeichnet, daß
die Einrastmittel (34) Ausnehmungen und/oder Erhöhungen und/oder Vertiefungen in der Nockenkurve (22) sind.
